# EUROPEAN PATENT APPLICATION

(11) **EP 1 912 421 A1**
(43) Date of publication of application: **16.04.2008**
(21) Application number: 06781696.7
(22) Date of filing: 26.07.2006
(51) Int. Cl.: H04N 1/00

(54) **IMAGE RECORDING APPARATUS**

(30) Priority: 29.07.2005 JP 2005221386
(71) Applicant: Sharp Kabushiki Kaisha, Osaka-shi, Osaka 545-8522 (JP)
(72) Inventor: SHIRAISHI, Kenichi, Nara 631-0076 (JP); KAWATSURI, Masaya, Kyoto 619-0238 (JP)
(74) Representative: Müller - Hoffmann & Partner
(86) International application number: PCT/JP2006/314784
(87) International publication number: WO 2007/013519

(57) **Abstract**

A facsimile machine (10) comprises a machine body (20), a cover (30), and a sheath (61). The machine body (20) includes an image reading unit (40), a document passage (41), an image forming unit (50), and a sheet passage (51) within it and is covered with the sheath (61). A document inlet (42), a sheet inlet (52), and a sheet outlet (53) are arranged in parallel with each other at the top of the machine body (20). The cover (30) shifts between an open position and a closed position relative to the machine body (20). In the open position, the cover (30) supports documents, blank sheets of paper, and printed sheets of paper. In the closed position, the cover (30) forms part of the sheath (61) and covers the document inlet (42), sheet inlet (52), and sheet outlet (53).

## Description

### [FIELD OF THE INVENTION]

The present invention relates to an image recorder including an image reading unit for reading the image on a document and an image forming unit for forming an image on a sheet.

### [BACKGROUND OF THE INVENTION]

An image recorder such as a facsimile machine has an image reading unit for reading the image on a document by detecting the light reflected from the document, a document passage through which a document is conveyed to the image reading unit, an image forming unit for forming an image on a sheet such as a sheet of paper, and a sheet passage through which a sheet is conveyed via the image forming unit.

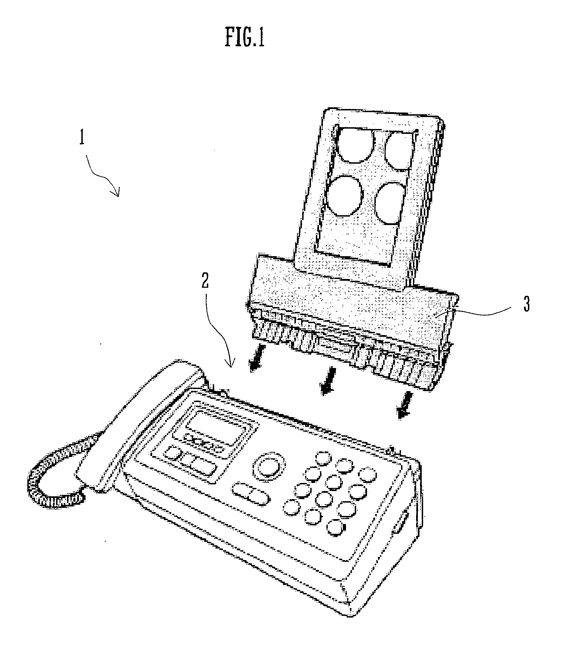

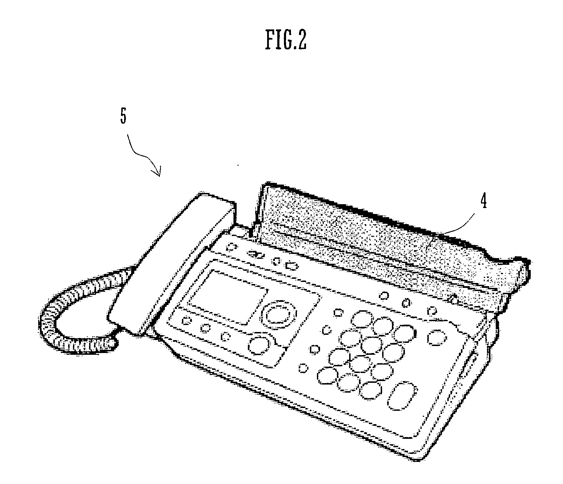

In an image recorder of this type, the document inlet of its document passage and the sheet inlet of its sheet passage are positioned in parallel with each other at its top. As shown in FIG. 1, an image recorder 1 has a feed tray 3 fixed or fitted removably to it near its sheet inlet 2. The feed tray 3 is an essential member for stable sheet feeding. As shown in FIG. 2, another image recorder 5 has a cover 4. In order to protect the document and sheet feed rollers of the recorder 5 from dust, the cover 4 can close the document and sheet inlets of the recorder while the recorder is not used, not performing document reading and image formation.

Still another image recorder has a cover that can be opened and closed (for example, see Patent Document 1). The cover serves, in its open position, as a feed tray for supporting sheets and a document tray for supporting documents. The cover of the image recorder disclosed by Patent Document 1 closes the document and sheet inlets of the recorder in its closed position.
[Patent Document 1] JP-2001-97560A

### [DISCLOSURE OF THE INVENTION]

### [PROBLEMS TO BE SOLVED BY THE INVENTION]

Installation of the image recorder to which its feed tray is fixed near its sheet inlet requires a large area, so that it cannot be installed in a place without a sufficient space.

When the image recorder to which its feed tray is fitted removably to its machine body is not used, the tray is often removed so that the recorder occupies a smaller area. When this recorder is used, performing document reading and image formation, the feed tray is fitted to it. It is time-consuming and troublesome to fit and remove the feed tray.

In the image recorder disclosed by Patent Document 1, the document inlet and the sheet inlet are positioned at the top of its machine body. After this recorder forms an image on a sheet, the sheet is delivered from the front of the machine body. This prevents the cover of this recorder from covering the sheet outlet of the recorder. As a result, dust may stick to the sheet delivery rollers positioned near the sheet outlet. The sticking dust may cause sheet misfeed or paper jam.

The object of the present invention is to provide an image recorder that can, by means of simple operation while it is used, support a document the image on which has not been read, a sheet having no image formed on it, and a sheet having an image formed on it, and that can, while it is not used, protect all of its document inlet, sheet inlet, and sheet outlet from duct.

### [MEANS FOR SOLVING THE PROBLEMS]

(1) The image recorder of the present invention comprises a machine body, a sheath, and a cover. The machine body includes within it an image reading unit for reading an image on a document, a document passage through which a document is conveyed from a document inlet via the reading unit to a document outlet, an image forming unit for forming an image on a sheet, and a sheet passage through which a sheet is conveyed from a sheet inlet via the forming unit to a sheet outlet. The sheath covers the machine body. The cover can shift between an open position and a closed position relative to the machine body. The document inlet, the sheet inlet, and the sheet outlet are arranged at the top of the machine body perpendicularly to the sides of a document to be conveyed, a sheet to be conveyed, and a delivered sheet. In the open position, the cover opens the document inlet, the sheet inlet, and the sheet outlet and supports a document to be inserted from the document inlet into the document passage, a sheet to be inserted from the sheet inlet into the sheet passage, and a sheet delivered from the sheet outlet. In the closed position, the cover forms part of the sheath and covers the document inlet, the sheet inlet, and the sheet outlet.
   In this structure, the cover can shift between the open and closed positions. While the recorder is used, the cover is positioned in the open position, where it supports a document the image on which has not been read, a sheet having no image formed on it, and a sheet having an image formed on it. While the recorder is not used, the cover is positioned in the closed position, where it covers all of the document inlet of the document passage and the sheet inlet and outlet of the sheet passage.
(2) The cover may have an extension for extending upstream in the direction in which the sheet to be inserted into the sheet passage in the open position is conveyed.
   In this structure, the extension is extended when the cover is in the open position. As a result, a document, a sheet having no image formed on it, and a sheet having an image formed on it are supported in a longer and wider area.
(3) The cover may be pivotable on one of its ends between the open and closed positions.
   In this structure, the cover can pivot, so that it shifts easily between the open and closed positions.
(4) The sheet outlet may be positioned between the document inlet and the sheet inlet.

In this structure, the document inlet of the document passage and the sheet inlet and outlet of the sheet passage are arranged in parallel with each other at the top of the machine body, and the sheet outlet is positioned between the document inlet and the sheet inlet. In this case, a document and a sheet having no image formed on it are conveyed downward, and a sheet having an image formed on it is conveyed upward. Accordingly, adjacent ones of the document and the sheets are conveyed in opposite directions.

If adjacent ones of the document and the sheets were conveyed in the same direction (for example, downward), one of the adjacent ones might follow the other into the document or sheet passage. In this structure, as stated above, adjacent ones of the document and the sheets are conveyed in opposite directions, so that document and sheet misfeed is prevented. If adjacent ones of the document and the sheets were conveyed upward, the earlier conveyed one of the adjacent ones might be pushed by the frictional force created between it and the other and protrude from the delivery tray (cover). In this structure, as stated above, adjacent ones of the document and the sheets are conveyed in opposite directions, so that the document and sheet stacking performance is improved.

### [EFFECTS OF THE INVENTION]

The present invention brings about the following effects.
(1) While the recorder is used, the cover is positioned in the open position, where it can support a document the image on which has not been read, a sheet having no image formed on it, and a sheet having an image formed on it. While the recorder is not used, the cover is positioned in the closed position, where it can cover all of the document inlet of the document passage and the sheet inlet and outlet of the sheet passage, thereby protecting them from dust. This prevents the misfeed of a sheet having an image formed on it, in addition to the misfeed of a document the image on which has not been read and a sheet having no image formed on it. By positioning the cover in the closed position while the recorder is not used, it is possible to reduce the area occupied by the recorder.
(2) By extending the extension when the cover is in the open position, it is possible to support, in a longer and wider area, a document the image on which has not been read, a sheet having no image formed on it, and a sheet having an image formed on it. This makes it possible to support the document and the sheets more stably.
(3) By being pivotable, the cover can be shifted easily between the open and closed positions, so that its operability is improved.
(4) It is possible to convey, in opposite directions, adjacent ones of a document the image on which has not been read, a sheet having no image formed on it, and a sheet having an image formed on it. This prevents document and sheet misfeed or improves the document and sheet stacking performance.

### [BRIEF DESCRIPTION OF THE DRAWINGS]

[FIG. 1] A perspective view showing the structure of a conventional image recorder.
[FIG. 2] A perspective view showing the structure of another conventional image recorder.
[FIG. 3] A perspective view showing the appearance of a facsimile machine according to an embodiment of the image recorder of the present invention.
[FIG. 4] A sectional side view showing the structure of the facsimile machine, with its cover in a closed position.
[FIG. 5] A sectional side view showing the structure of the facsimile machine, with its cover in an open position.
[FIG. 6] A front view schematically showing the structure of the extension fitted to the cover.
[FIG. 7] An explanatory drawing showing the directions in which documents, blank sheets of paper, and printed sheets of paper are conveyed.

### [WHAT IS INDICATED BY REFERENCE NUMERALS]

- 10: facsimile machine (image recorder)
- 20: machine body
- 30: cover
- 40: image reading unit
- 41: document passage
- 42: document inlet
- 43: document outlet
- 50: image forming unit
- 51: sheet passage
- 52: sheet inlet
- 53: sheet outlet
- 61: sheath

### [BEST MODE OF CARRYING OUT THE INVENTION]

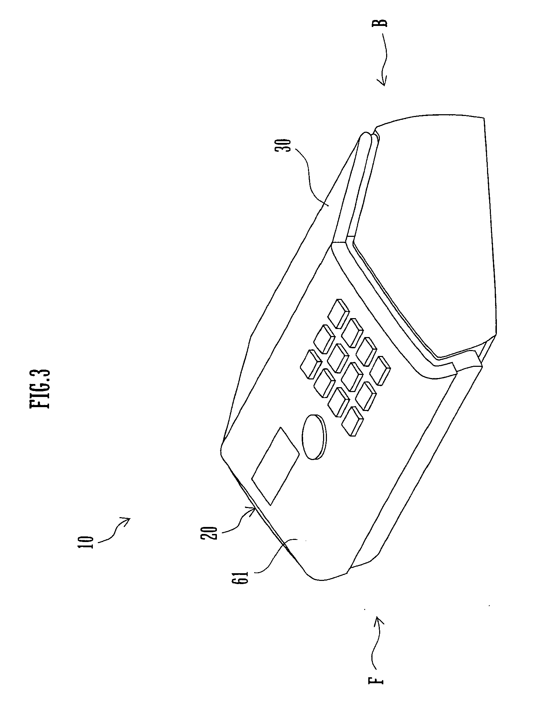

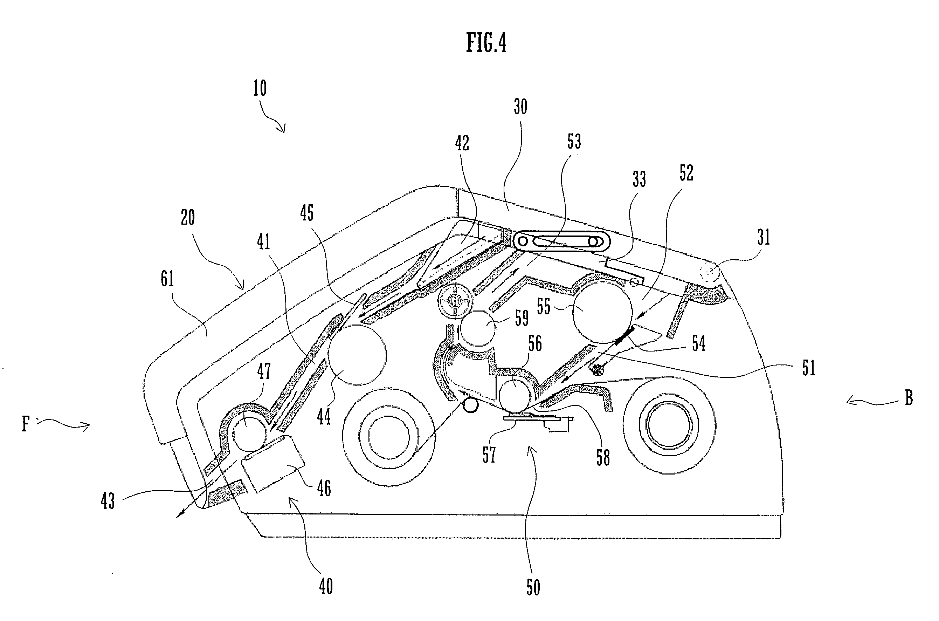

An embodiment of the present invention will be described below with reference to the drawings. FIG. 3 is a perspective view showing the appearance of a facsimile machine 10 according to an embodiment of the image recorder of the invention. FIG. 4 is a sectional side view showing the structure of the machine 10, with its cover in a closed position. In FIG. 4, the left and right sides of the machine 10 are its front F and back B respectively.

The facsimile machine 10 includes a machine body 20, a cover 30, and a sheath 61. The machine body 20 has in it an image reading unit 40 for reading the image on a document, a document passage 41 through which a document is conveyed to the reading unit 40, an image forming unit 50 for forming an image on a sheet of paper, and a sheet passage 51 through which a sheet of paper is conveyed via the forming unit 50. The sheath 61 is the outer covering of the machine body 20.

The sheet passage 51 correspond to the sheet passage of the present invention.

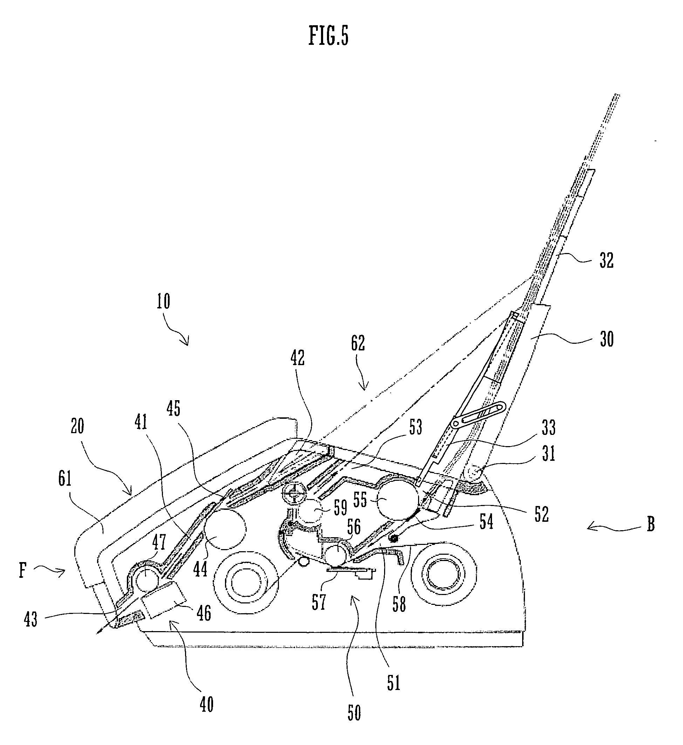

The sheath 61 has an opening 62 (FIG. 5) formed through an upper portion of it. The cover 30 is so fitted as to close the opening 62. The cover 30 can pivot on a pivot shaft 31 between the closed position and an open position. In the closed position, as shown in FIG. 4, the cover 30 closes the opening 62. When the cover 30 is in the open position, as shown in FIG. 5, the opening 62 is open. The pivot shaft 31 is positioned on the side of the opening 62 that is adjacent to the back B of the machine body 20.

By being pivotable, the cover 30 can be shifted easily between the open and closed positions, so that its operability is improved. The cover 30 will be described later on in detail.

The document passage 41 has a document inlet 42 and a document outlet 43. The inlet 42 opens into a portion of the opening 62 that is adjacent to the front F of the machine body 20. The outlet 43 opens in the front F. A document feed roller 44 is positioned midway on the passage 41. A separating rubber plate 45 is positioned opposite the feed roller 44. The documents inserted into the inlet 42 are separated from one another between the feed roller 44 and the rubber plate 45, and only the bottom document is conveyed toward the outlet 43.

An image sensor 46 is positioned downstream from the document feed roller 44 in the direction in which documents are conveyed. A back roller 47 is positioned opposite the sensor 46. The feed roller 44 feeds a document between the sensor 46 and back roller 47. The sensor 46 reads the image on the document, with the back roller 47 pressing on the back side of the document against the sensor 46. The back roller 47 then delivers the document out of the machine body 20 through the document outlet 43. The sensor 46 and back roller 47 are included in the image reading unit 40.

The sheet passage 51 is roughly U-shaped and has a sheet inlet 52 at one of its ends and a sheet outlet 53 at the other end. The inlet 52 opens into a portion of the opening 62 that is adjacent to the back B of the machine body 20. The outlet 53 opens into a portion of the opening 62 that is positioned between the document inlet 42 and sheet inlet 52. In other words, the document inlet 42, sheet inlet 52, and sheet outlet 53 open into the opening 62 in parallel with each other. The sheet inlet 52 and sheet outlet 53 correspond to the sheet inlet and sheet outlet respectively of the present invention.

A separating pad 54 and a sheet feed roller 55 are positioned opposite each other on the sheet passage 51 near the sheet inlet 52.

FIG. 5 is a sectional side view showing the structure of the facsimile machine 10, with the cover 30 in the open position. Stacked sheets of paper are inserted into the sheet inlet 52 and held with their front ends in contact with the separating pad 54. As the sheet feed roller 55 rotates, it and the separating pad 54 cooperate to convey only the sheet nearest to it toward the sheet outlet 53.

A platen roller 56 and a thermal head 57 are positioned opposite each other downstream from the sheet feed roller 55 in the direction in which sheets of paper are conveyed. An ink film 58 is positioned between the platen roller 56 and thermal head 57 and fed in this direction at the same speed as sheets of paper are conveyed.

A sheet of paper is fed into the position between the platen roller 56 and ink film 58. The thermal head 57 heat-transfers ink on the film 58 to the sheet, thereby forming an image on the sheet. The platen roller 56 and thermal head 57 are included in the image forming unit 50.

A sheet delivery roller 59 is positioned downstream from the platen roller 56 in the direction in which sheets of paper are conveyed. The delivery roller 59 delivers the sheet upward through the sheet outlet 53.

While the facsimile machine 10 is used, performing image reading, image formation, etc., the cover 30 is positioned in the open position, as shown in FIG. 5. While the machine 10 is not used, not performing image reading, image formation, etc., the cover 30 is positioned in the closed position, as shown in FIG. 4. In this embodiment, a separator 33 is positioned on the side of the cover 30 that is adjacent to the front F of the machine body 20. The separator 33 separates a blank sheet of paper to be inserted into the sheet passage 51 and a printed sheet of paper delivered from this passage 51.

In the open position, the cover 30 opens the inlet 42 of the document passage 41 and the inlet 52 and outlet 53 of the sheet passage 51 and supports the documents to be inserted into the passage 41, the sheets to be inserted into the passage 51, and the sheets delivered from the passage 51.

Specifically, the blank sheets to be inserted into the sheet passage 51 are supported directly by the cover 30. Lower portions of the sheets printed and delivered from the passage 51 are supported by the separator 33, while upper portions of them are supported by the cover 30 indirectly with the blank sheets interposed between the cover and the printed and delivered sheets. The documents to be inserted into the document passage 41 are supported by the cover 30 indirectly with the blank and printed sheets interposed between the cover and the documents.

As stated above, by being positioned in the open position, the cover 30 serves as a document tray, a feed tray, and a delivery tray, which support documents, blank sheets of paper, and printed sheets of paper, respectively.

By positioning the cover 30 in the open position while the facsimile machine 10 is used, it is possible to support documents, blank sheets of paper, and printed sheets of paper with the cover 30.

In the closed position, the cover 30 closes the opening 62 of the sheath 61, covering the document inlet 42, sheet inlet 52, and sheet outlet 53. In this position, the cover 30 forms part of the sheath 61, without protruding from the sheath. The sheath 61 covers the image reading unit 40, document passage 41, image forming unit 50, and sheet passage 51.

By positioning the cover 30 in the closed position while the facsimile machine 10 is not used, it is possible to cover all of the document inlet 42, sheet inlet 52, and sheet outlet 53 with the cover 30. This makes it possible to prevent dust from sticking to the document feed roller 44, sheet feed roller 55, and sheet delivery roller 59. As a result, it is possible to prevent misfeed of not only documents and blank sheets of paper but also printed sheets of paper.

By positioning the cover 30 in the closed position while the facsimile machine 10 is not used, it is also possible to reduce the area occupied by the machine 10.

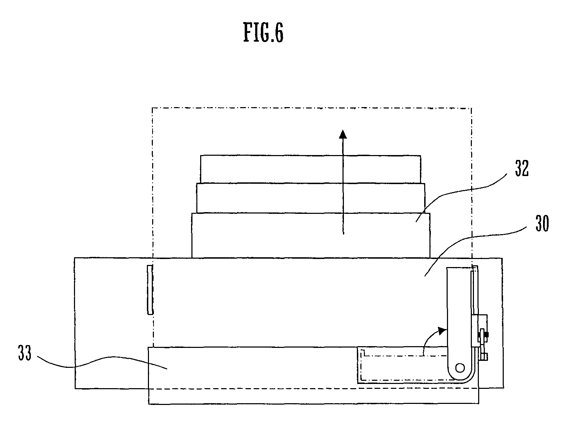

FIG. 6 is a front view schematically showing the structure of the extension 32 fitted to the cover 30. The cover 30 has an extension tray 32, which corresponds to the extension of the present invention. When the cover 30 is in the open position, the tray 32 can extend upstream in the direction in which blank sheets of paper are conveyed. By way of example, the tray 32 consists of three members and can extend by three stages.

By extending the extension tray 32 when the cover 30 is in the open position, it is possible to support documents, blank sheets of paper, and printed sheets of paper in a longer and wider area. This makes it possible to support documents, blank sheets of paper, and printed sheets of paper more stably, so that the document and sheet conveyability can be improved.

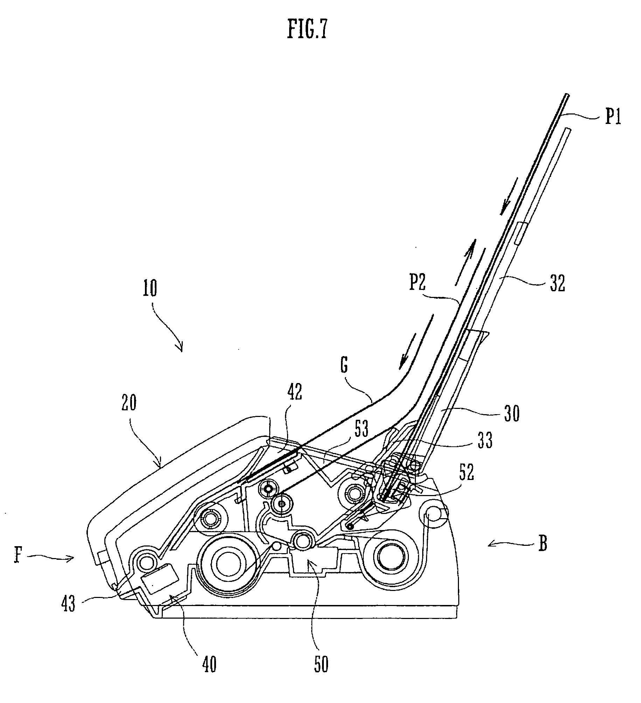

As stated above, the inlet 42 of the document passage 41 and the inlet 52 and outlet 53 of the sheet passage 51 are arranged in parallel with each other at the top of the machine body 20, and the sheet outlet 53 is positioned between the inlets 42 and 52. In this case, as shown in FIG. 7, a document G and a blank sheet of paper P1 are conveyed downward, and a printed sheet of paper P2 is conveyed upward. Accordingly, adjacent ones of the document G and sheets P1 and P2 are conveyed in opposite directions.

If adjacent ones of the document and the sheets were conveyed in the same direction (for example, downward), one of the adjacent ones might follow the other into the document or sheet passage. As stated above, adjacent ones of the document and the sheets are conveyed in opposite directions, so that document and sheet misfeed is prevented.

If, as is the case with a conventional facsimile machine, adjacent ones of the document and the sheets were conveyed upward, the earlier conveyed one of the adjacent ones might be pushed by the frictional force created between it and the other and protrude from the cover 30. As stated above, adjacent ones of the document and the sheets are conveyed in opposite directions, so that the document and sheet stacking performance is improved.

The facsimile machine 10 can form images on not only sheets of paper but also other sheets such as OHP films.

## Claims

1. An image recorder comprising:
a machine body including therewithin an image reading unit for reading an image on a document, a document passage through which a document is conveyed from a document inlet via the reading unit to a document outlet, an image forming unit for forming an image on a sheet, and a sheet passage through which the sheet is conveyed from a sheet inlet via the forming unit to a sheet outlet;
a sheath covering the machine body; and
a cover capable of shifting between an open position and a closed position relative to the machine body;
the recorder being **characterized in that** the document inlet, the sheet inlet, and the sheet outlet are arranged at the top of the machine body perpendicularly to the sides of a document to be conveyed, a sheet to be conveyed, and a delivered sheet;
the recorder being further **characterized in that**, in the open position, the cover opens the document inlet, the sheet inlet, and the sheet outlet and supports a document to be inserted from the document inlet into the document passage, a sheet to be inserted from the sheet inlet into the sheet passage, and a sheet delivered from the sheet outlet;
the recorder being further **characterized in that**, in the closed position, the cover forms part of the sheath and covers the document inlet, the sheet inlet, and the sheet outlet.

2. An image recorder as described in claim 1, further **characterized in that** the cover has an extension for extending upstream in the direction in which a sheet to be inserted into the sheet passage in the open position is conveyed.

3. An image recorder as described in claim 1, further **characterized in that** the cover can pivot on one end thereof between the open and closed positions.

4. An image recorder as described in claim 1, further **characterized in that** the sheet outlet is positioned between the document inlet and the sheet inlet.
